# EUROPEAN PATENT SPECIFICATION

(11) **EP 3 809 065 B1**
(45) Date of publication and mention of the grant of the patent: **06.12.2023**
(21) Application number: 18922714.3
(22) Date of filing: 13.06.2018
(51) Int. Cl.: F25B 49/02, F25B 1/00

(54) **REFRIGERATION CYCLE DEVICE**
KÄLTEKREISLAUFVORRICHTUNG
DISPOSITIF À CYCLE FRIGORIFIQUE

(43) Date of publication of application: 21.04.2021
(73) Proprietor: Mitsubishi Electric Corporation, Tokyo 100-8310 (JP)
(72) Inventor: SATA, Hiroshi, Tokyo 100-8310 (JP); ARII, Yusuke, Tokyo 100-8310 (JP); NAKAGAWA, Masahiko, Tokyo 100-8310 (JP)
(74) Representative: Witte, Weller & Partner Patentanwälte mbB
(86) International application number: PCT/JP2018/022558
(87) International publication number: WO 2019/239517

(56) References cited:
- EP-A2- 2 952 833
- WO-A1-2016/035187
- JP-A- H05 164 382
- JP-A- H09 196 479
- JP-A- 2001 141 323
- JP-A- 2006 200 890
- JP-A- 2011 094 915
- JP-A- 2013 257 088
- JP-A- 2014 185 786
- JP-A- 2015 025 578
- JP-A- 2015 145 742
- JP-Y1- S4 721 309
- US-A1- 2002 026 804
- US-A1- 2003 145 614

## Description

### Technical Field

The present invention relates to refrigeration cycle devices used for freezing warehouses and other applications and particularly to cryo-protection for a device included in a refrigeration cycle device.

### Background Art

A conventional refrigeration cycle device includes a compressor, a condenser, an expansion valve, and an evaporator and has a refrigerant circuit through which refrigerant circulates. In the refrigerant circuit, the refrigerant compressed by the compressor turns into high-temperature, high-pressure gaseous refrigerant and is supplied to the condenser. The refrigerant supplied to the condenser radiates heat to air and is thereby liquefied. The liquefied refrigerant is decompressed by the expansion valve to get into a two-phase gas-liquid state and is supplied to the evaporator to remove heat from ambient air and is thereby gasified. The gasified refrigerant returns to the compressor.

A refrigeration cycle device of this type sets evaporating temperature of an evaporator to an ultralow temperature during operation to cool an ultralow refrigeration area that is a food storage area in a freezer or other apparatus to an ultralow temperature (for example, see Patent Literature 1).

Patent Literature 2, according to its abstract, states that, in various implementations, compressor operation in an air conditioner may be managed by maintaining oil viscosity, a temperature differential, compressor sump temperature, and/or suction pressure. Properties of the air conditioner or portions thereof, such as the compressor, may be determined. To manage compressor operations, operation(s) of the air conditioner may be adjusted based on one or more of the determined properties.

### Citation List

### Patent Literature

Patent Literature 1: Japanese Unexamined Patent Application Publication No. 5-340616
Patent Literature 2: EP 2 952 833 A2

### Summary of Invention

### Technical Problem

In Patent Literature 1, materials used for a compressor and other components of a refrigeration cycle device need to be specific materials or substances that can withstand ultralow temperatures for reasons including adherence to a high pressure gas safety act and prevention of material degradation. This poses a problem of a substantial rise in cost of the refrigeration cycle device.

The refrigeration cycle device of the present disclosure, accomplished to solve the problem described above, aims to provide a refrigeration cycle device capable of adhering to a rule about a minimum operating temperature of a device that is included in the refrigeration cycle device and that is subject to cryo-protection.

### Solution to Problem

A refrigeration cycle device according to the present invention is defined in independent claim 1.

### Advantageous Effects of Invention

The refrigeration cycle device of the of the present invention controls the refrigerant circuit to maintain the temperature of the refrigerant at a temperature higher than the cryo-protective temperature, which is specified depending on the minimum operating temperature based on the material used for the housing of the device subject to cryo-protection, and is thereby able to adhere to a rule about a minimum operating temperature of the device subject to cryo-protection. The refrigeration cycle device uses the refrigerant with a large temperature glide and controls the refrigerant circuit to increase the pressure level of the lower pressure when a measurement temperature based on the index value measured with the measurement sensor reaches the cryo-protective temperature or below. This enables the refrigeration cycle device to adhere to the rule about the minimum operating temperature of the device subject to cryo-protection even when the liquid refrigerant flows into the device subject to cryo-protection.

### Brief Description of Drawings

[Fig. 1] Fig. 1 is a drawing illustrating a refrigeration cycle device according to Embodiment 1 of the present invention
[Fig. 2] Fig. 2 is a flowchart illustrating control for cryo-protection executed by the refrigeration cycle device according to Embodiment 1 of the present invention.
[Fig. 3] Fig. 3 is a drawing illustrating a compressor equipped with a crankcase heater used in a first pattern of a heating process in a course of cryo-protective control in Fig. 2.
[Fig. 4] Fig. 4 is a drawing illustrating a refrigerant circuit in a case of a second pattern of a heating process executed for cryo-protective control in Fig. 2.
[Fig. 5] Fig. 5 is a drawing illustrating a configuration of a refrigeration cycle device according to Embodiment 2 which is not part of the present invention.
[Fig. 6] Fig. 6 is a drawing illustrating a configuration of a refrigeration cycle device according to Embodiment 3 which is not part of the present invention.
[Fig. 7] Fig. 7 is a flowchart illustrating control for cryo-protection executed by the refrigeration cycle device according to Embodiment 3 which is not part of the present invention.
[Fig. 8] Fig. 8 is a Mollier diagram for illustrating cryo-protective control executed by the refrigeration cycle device according to Embodiment 3 which is not part of the present invention.
[Fig. 9] Fig. 9 is a drawing illustrating a configuration of a refrigeration cycle device according to Embodiment 4 which is not part of the present invention.

### Description of Embodiments

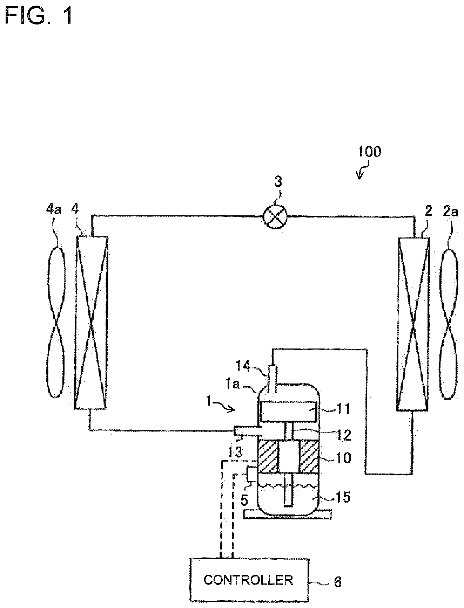

Refrigeration cycle devices according to the embodiment of the present invention and embodiments which are not part of the present invention will now be described with reference to the drawings. In the following drawings including Fig. 1, same or equivalent elements are denoted by same reference numerals, and this applies throughout embodiments described below. Forms of constituent elements shown in the full text of the specification are merely examples and are not intended to limit the subject matter described herein. Changes in temperature and pressure are not determined particularly in relation to absolute values but are determined relatively in conditions and operating statuses of systems and devices.

Embodiment 1, according to the present invention.

Fig. 1 is a drawing illustrating a refrigeration cycle device according to the embodiment of the present invention.

A refrigeration cycle device 100 includes a compressor 1, a condenser 2, a pressure reducing unit 3 such as an expansion valve, and an evaporator 4. These components are connected in order by pipes to make up a refrigerant circuit through which refrigerant circulates. The refrigeration cycle device 100 further includes a first fan 2a to send air to the condenser 2 and a second fan 4a to send air to the evaporator 4. The refrigeration cycle device 100 also includes a first temperature sensor 5 disposed on an outer periphery of a housing 1a of the compressor 1 to measure a temperature of the housing 1a and a controller 6 to control the whole refrigeration cycle device 100. This refrigeration cycle device 100 is, for example, used for a freezing warehouse or other applications.

The compressor 1 has, inside the housing 1a, a motor 10 and a compressor unit 11 to suction refrigerant from outside and compress the refrigerant. The two components are connected by a main shaft 12. Refrigerant gas having low pressure is taken in the housing 1a through a suction pipe 13, and the compressor unit 11 compresses the low-pressure refrigerant gas using rotational force given by the motor 10 via the main shaft 12 to put the refrigerant gas in a high-pressure state and discharges the refrigerant gas to a space inside the housing 1a. The high-pressure refrigerant gas discharged to the space inside the housing 1a is discharged to the outside through a discharge pipe 14. The compressor unit 11 may have a compression mechanism of a type such as a scroll type or a rotary type. Refrigerating machine oil 15 is stored in a lower part of the housing 1a. The refrigerating machine oil 15 is supplied to sliding parts of the compressor unit 11 through inside the main shaft 12 by an oil supply mechanism (not shown) disposed on a lower end of the main shaft 12.

The controller 6 is, for example, a microcomputer and includes a central processing unit (CPU), random-access memory (RAM), and read-only memory (ROM). In the ROM, a control program and a program provided for a flowchart described later are stored. The controller 6 executes low temperature maintenance control to maintain a temperature of the refrigerant at a temperature higher than a cryo-protective temperature. The cryo-protective temperature is a temperature that is specified depending on a minimum temperature for operation (hereinafter referred to as a "minimum operating temperature") based on a material used for the housing 1a of the compressor 1, a device subject to cryo-protection. The controller 6 also controls the refrigerant circuit to ensure cryo-protection for the compressor 1, a device subject to cryo-protection, based on a temperature measured with the first temperature sensor 5. The control for cryo-protection will be described later.

In the refrigeration cycle device 100 configured as described above, the gaseous refrigerant discharged from the compressor 1 flows into the condenser 2, exchanges heat with air passing through the condenser 2, and flows out in the form of high-pressure liquid. The high-pressure liquid refrigerant flowing out from the condenser 2 is decompressed by the pressure reducing unit 3 to turn into two-phase gas-liquid refrigerant with low pressure and flows into the evaporator 4. The low-pressure two-phase gas-liquid refrigerant flowing into the evaporator 4 exchanges heat with air passing through the evaporator 4 and evaporates to cool, for example, an interior of the freezing warehouse. The low-pressure gaseous refrigerant flowing out from the evaporator 4 is suctioned again into the compressor 1.

In the embodiment of the present invention, the refrigeration cycle device uses a refrigerant with a large temperature glide. The refrigerant with a large temperature glide is, as described above, equivalent to a refrigerant having a difference of 1 degree C or greater in temperature between saturated liquid and saturated vapor at a constant pressure. Specifically, examples of the refrigerant include R463A, R448A, R449A, R407C, and R407H. In this way, since the refrigeration cycle device of Embodiment 1 uses a refrigerant with a large temperature glide, the temperature of the refrigerant in the evaporator 4 is not constant and the refrigerant temperature is lower at an outlet than at an inlet of the evaporator 4. Thus, the devices making up the refrigeration cycle device 100 are controlled such that a value (e.g., an average) between the refrigerant temperature at the inlet of the evaporator 4 and the refrigerant temperature at the outlet of the evaporator 4 reaches a target evaporating temperature. The target evaporating temperature is, for example, set at -45 degrees C, and this refrigeration cycle device 100 cools the freezing warehouse or other apparatus to a low temperature.

An outline of the cryo-protective control will now be described. When the temperature of the housing 1a reaches the cryo-protective temperature, which is specified depending on the minimum operating temperature, during a period of low temperature maintenance control, the controller 6 controls the refrigerant circuit to increase a pressure level of lower pressure in the refrigerant circuit and ensures that the temperature of the housing 1a does not fall below the minimum operating temperature. The "control to increase the pressure level of the lower pressure in the refrigerant circuit" will be described later. If the temperature of the housing 1a stays at the cryo-protective temperature or below even after execution of the "control to increase the pressure level of the lower pressure in the refrigerant circuit", the controller stops the compressor 1 to ensure that the temperature of the housing 1a does not fall below the minimum operating temperature.

The material for the housing 1a is, for example, SM400B steel. The minimum operating temperature of the SM400B steel is -50 degrees C. The cryo-protective temperature is a temperature not reaching the minimum operating temperature and the cryo-protective temperature of the SM400B steel is, for example, set at -49 degrees C when the minimum operating temperature is -50 degrees C. The following description is given on condition that the minimum operating temperature is -50 degrees C and the cryo-protective temperature is -49 degrees C.

It is assumed that the refrigeration cycle device of the embodiment of the invention uses a refrigerant with a large temperature glide and is still able to display cooling capacity equal to cooling capacity the refrigeration cycle device that uses a refrigerant without a temperature glide or with a small temperature glide displays. Thus, the refrigeration cycle device that uses a refrigerant with a large temperature glide is required to operate, as described above, such that an average of the refrigerant temperature at the inlet of the evaporator 4 and the refrigerant temperature at the outlet of the evaporator 4 is -45 degrees C to have refrigeration capacity on a par with refrigeration capacity displayed by the refrigeration cycle device that uses a refrigerant without a temperature glide or with a small temperature glide with the target evaporating temperature set at -45 degrees C. Specifically, for example, for a refrigerant with a temperature glide of 6 degrees C, the average temperature is -45 degrees C when the refrigerant temperature at the inlet of the evaporator 4 is - 48 degrees C and the refrigerant temperature at the outlet of the evaporator 4 is -42 degrees C.

Thus, when the refrigeration cycle device 100 operates normally and the temperature of the refrigerant returning to the compressor 1 from the evaporator 4 is -42 degrees C, no problem arises because the temperature is higher than the minimum specification temperature. However, the refrigeration cycle device can get into an operating state in which the average of the refrigerant temperatures at the inlet and the outlet of the evaporator 4 declines to near -50 degrees C. In this case, the temperature of the housing 1a may fall below the minimum operating temperature. Specifically, for example, when the refrigeration cycle device uses a refrigerant with a temperature glide of 6 degrees C, the average temperature is -50 degrees C when the refrigerant temperature at the inlet of the evaporator 4 is -53 degrees C and the refrigerant temperature at the outlet of the evaporator 4 is -47 degrees C. If the refrigerant does not completely evaporate in the evaporator 4 in this operating state and returns in the form of liquid to the compressor, the liquid refrigerant with a temperature of -50 degrees C or lower returns to the compressor 1. In other words, the liquid refrigerant with a temperature below the minimum operating temperature returns to the compressor 1. This may cause the temperature of the housing 1a to fall below the minimum operating temperature.

Hence, the refrigeration cycle device of of the embodiment of the invention executes cryo-protective control to ensure that the temperature of the housing 1a does not fall below the minimum operating temperature.

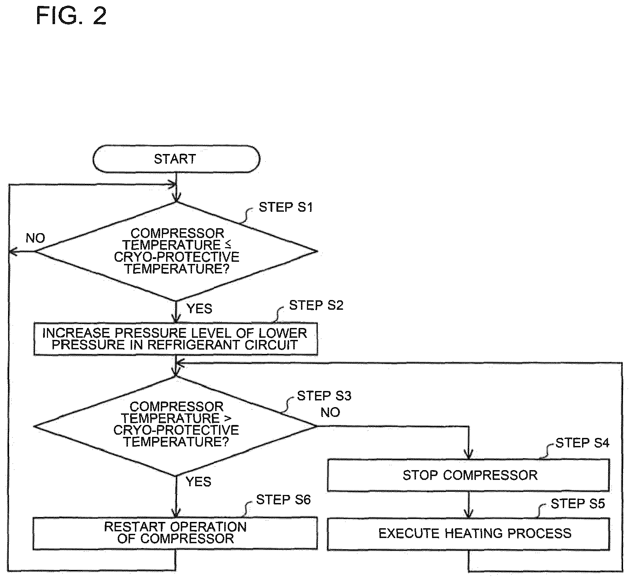

Fig. 2 is a flowchart illustrating control for cryo-protection executed by the refrigeration cycle device according to the embodiment of the present invention.

The controller 6, during a period of low temperature maintenance control, determines whether or not the temperature of the housing 1a measured with the first temperature sensor 5 (hereinafter referred to as a compressor temperature) is lower than or equal to the cryo-protective temperature (step S1). The controller 6 stores the cryo-protective temperature beforehand. When determining that the compressor temperature is lower than or equal to the cryo-protective temperature, the controller 6 executes the "control to increase the pressure level of the lower pressure in the refrigerant circuit" (step S2). Specifics of the "control to increase the pressure level of the lower pressure in the refrigerant circuit" will be described later. If the compressor temperature measured with the first temperature sensor 5 stays at the cryo-protective temperature or below even after execution of the "control to increase the pressure level of the lower pressure in the refrigerant circuit" (step S3), the controller stops the compressor 1 (step S4) and executes a heating process to increase a temperature of the compressor 1 (step S5). Specifics of the heating process will be described later. When the heating process executed in step S3 causes the compressor temperature measured with the first temperature sensor 5 to increase to a level above the cryo-protective temperature (step S3), the controller 6 restarts operation of the compressor 1 (step S6) and returns to the determination process in step S1 to repeat the steps described above.

The "control to increase the pressure level of the lower pressure in the refrigerant circuit" is, for example, equivalent to types of control listed in items (1) to (4) below:
(1) Decrease an operating frequency of the compressor 1.
(2) Decrease a quantity of air supplied by the fan to increase a level of higher pressure.
(3) Decrease the number of the compressors 1 in operation.
(4) Stop the compressor 1.

Regarding the item (3), Fig. 1 shows a configuration including one compressor 1. However, a plurality of compressors 1 may be installed. In this case, the number of the compressors 1 in operation can be decreased to increase the pressure level of the lower pressure in the refrigerant circuit.

It is assumed that the "control to increase the pressure level of the lower pressure in the refrigerant circuit" in Fig. 2 involves performing all or some of the items (1) to (3) and then stopping the compressor 1 if the compressor temperature still stays at the cryo-protective temperature or below. However, when the compressor temperature measured with the first temperature sensor 5 is lower than or equal to the cryo-protective temperature in step S1, the "control to increase the pressure level of the lower pressure in the refrigerant circuit" may consist of "stopping the compressor 1" in the item (4) described above.

In this way, when the temperature of the housing 1a decreases to a level lower than or equal to the cryo-protective temperature, the controller controls the refrigerant circuit to increase the pressure level of the lower pressure in the refrigerant circuit. This allows the refrigeration cycle device to adhere to laws and rules concerning the housing 1a and hinder degradation of the housing 1a.

Next, the heating process will be described. The heating process is executed in any of the following three patterns.

### <First pattern>

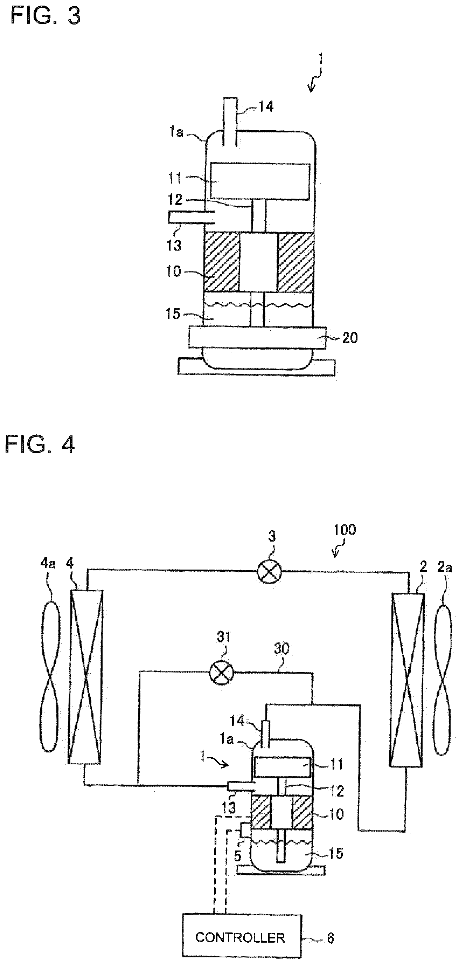

Fig. 3 is a drawing illustrating a compressor equipped with a crankcase heater used in a first pattern of a heating process in a course of cryo-protective control in Fig. 2.

As shown in Fig. 3, a crankcase heater 20 is disposed on the outer periphery of the housing 1a of the compressor 1. In the first pattern of the heating process, the crankcase heater 20 is turned on to heat the housing 1a of the compressor 1.

### <Second pattern>

Fig. 4 is a drawing illustrating a refrigerant circuit in a case of a second pattern of a heating process executed for cryo-protective control in Fig. 2.

As shown in Fig. 4, this refrigerant circuit includes, in addition to components of the refrigerant circuit shown in Fig. 1, a bypass 30 branching off from a passage between the compressor 1 and the condenser 2 and being connected to a passage between the evaporator 4 and the compressor 1 and a solenoid valve 31 to open or close the bypass 30. In the second pattern, the solenoid valve 31 is opened and the high-temperature high-pressure refrigerant discharged from the compressor 1 or the refrigerating machine oil 15 is returned to a suction side of the compressor 1 via the bypass 30 to increase the temperature of the compressor 1.

### <Third pattern>

In a third patten of the heating process, the controller 6 supplies electric current to the motor 10 and thereby executes constraint energization to heat the refrigerant from an interior of the compressor 1. The constraint energization refers to applying a low voltage to an extent that causes a magnetic steel sheet of a stator of the motor 10 to generate heat but does not cause the compressor 1 to operate.

As described above, the refrigeration cycle device according to Embodiment 1 uses a refrigerant with a large temperature glide and is still able to operate with the evaporating temperature set at a low level while adhering to a law on the minimum operating temperature of the housing 1a.

"Stopping the compressor 1" involved in the cryo-protective control differs from stopping the refrigeration cycle device. Stopping the refrigeration cycle device is equivalent to stopping by pump down whereby to run the compressor 1 with a solenoid valve (not shown) disposed upstream of the pressure reducing unit 3, being closed. The operation of stopping the refrigeration cycle device by pump down includes stopping the compressor 1 when the level of the lower pressure has decreased, and after the compressor 1 is stopped, the level of the lower pressure gradually rises.

Although not illustrated in the flowchart of Fig. 2, when the compressor temperature reaches a level lower than or equal to the cryo-protective temperature, the controller may send a notice about the abnormality to the outside by, for example, sounding a buzzer. This allows the user to know the abnormality.

In the embodiment of the present invention, , the first temperature sensor 5 used to measure the temperature of the housing 1a of the compressor 1 is a measurement sensor that measures an index value related to a temperature of a housing of a device subject to cryo-protection. The following description is given of embodiments where other sensors are used. In Embodiment 1, the device subject to cryo-protection is the compressor 1. In an embodiment described below, an accumulator is also a device subject to cryo-protection. In consideration of these respects, prior to giving a description of Embodiments 2 to 4 below, measurement sensors that appear in this specification are defined as below.

First temperature sensor: A sensor for measuring a temperature of the housing 1a of the compressor 1
Second temperature sensor: A sensor for measuring a temperature of a housing of an accumulator (that appears in Embodiment 4 described later)
Third temperature sensor: A sensor disposed on a pipe upstream of a compressor 1 to measure a temperature at a place of the disposition
Fourth temperature sensor: A sensor disposed on a pipe upstream of an accumulator to measure a temperature at a place of the disposition

Embodiment 2, not forming part of the present invention.

In Embodiment 1 of the present invention described above, the first temperature sensor 5 is the measurement sensor. Embodiment 2 differs from Embodiment 1 of the present invention. in that a third temperature sensor 5a is used as the measurement sensor. Differences between Embodiment 2 and Embodiment 1 will be primarily described below.

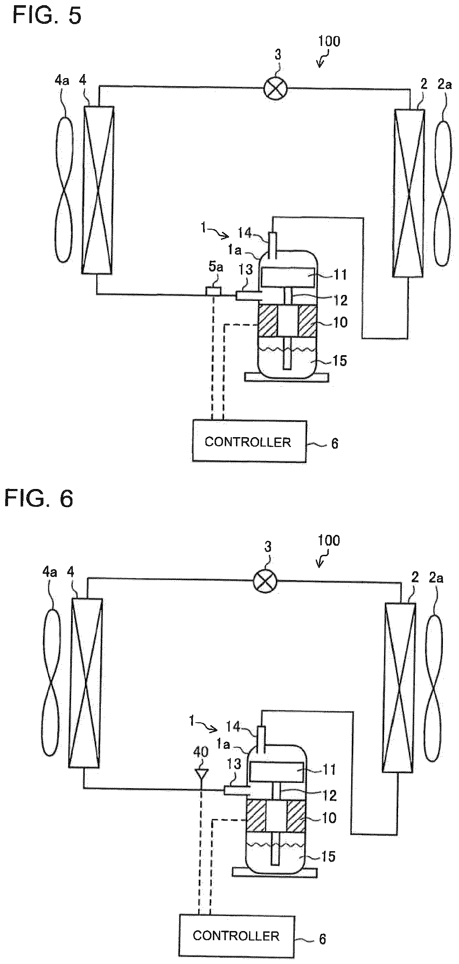

Fig. 5 is a drawing illustrating a configuration of a refrigeration cycle device according to Embodiment 2.

In Embodiment 2, the third temperature sensor 5a is, as described above, disposed on a pipe upstream of a compressor 1 to measure a temperature of refrigerant flowing into the compressor 1. Apart from this, a refrigeration cycle device 100 is similar in configuration to the refrigeration cycle device of Embodiment 1 illustrated in Fig. 1. Control for cryo-protection executed based on the temperature measured with the third temperature sensor 5a is also similar to that in Embodiment 1.

In Embodiment 1 of the present invention described above, the temperature of the housing 1a is taken as a compressor temperature that is used as an index value in a course of the cryo-protective control. In Embodiment 2, the temperature of the refrigerant flowing into the compressor 1 is taken. This enables the refrigeration cycle device of Embodiment 2 to detect a decrease in temperature of the housing 1a earlier than the refrigeration cycle device of Embodiment 1 does.

### Embodiment 3.

In Embodiments 1 and 2 described above, the temperature sensors are each used as a measurement sensor that measures an index value. Embodiment 3 which is not part of the present invention differs from Embodiments 1 and 2 in that a pressure sensor is used as the measurement sensor. Differences between Embodiment 3 and Embodiments 1 and 2 will be primarily described below.

Fig. 6 is a drawing illustrating a configuration of a refrigeration cycle device according to Embodiment 3.

A refrigeration cycle device 100 of Embodiment 3 includes a pressure sensor 40 disposed between an outlet of a pressure reducing unit 3 and an inlet of a compressor 1 to measure a pressure at a place of the disposition. Apart from this, the refrigeration cycle device 100 is similar in configuration to the refrigeration cycle device of Embodiment 1 illustrated in Fig. 1.

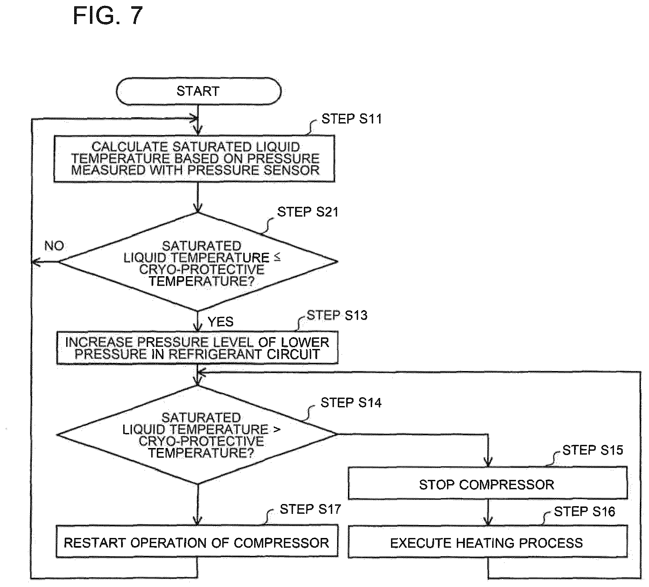

Fig. 7 is a flowchart illustrating control for cryo-protection executed by the refrigeration cycle device according to Embodiment 3.

A controller 6, during a period of low temperature maintenance control, calculates a saturated liquid temperature based on a pressure measured with the pressure sensor 40 at a place between the outlet of the pressure reducing unit 3 and the inlet of the compressor 1 (step S11). The controller 6 determines whether or not the saturated liquid temperature is lower than or equal to a predetermined cryo-protective temperature (step S12). When determining that the saturated liquid temperature is lower than or equal to the cryo-protective temperature, the controller 6 executes control to increase a pressure level of lower pressure in a refrigerant circuit (step S13). The control to increase the pressure level of the lower pressure in the refrigerant circuit is similar to that in Embodiment 1. If the compressor temperature measured with the first temperature sensor 5 stays at the cryo-protective temperature or below even after execution of the control to increase the pressure level of the lower pressure in the refrigerant circuit (step S14), the controller stops the compressor 1 (step S15). Then, the controller 6 executes a heating process to increase a temperature of the compressor 1 (step S16). The heating process is similar to that in Embodiment 1. When the heating process executed in step S16 causes the saturated liquid temperature to increase to a level above the cryo-protective temperature (step S14), the controller 6 restarts the operation of the compressor 1 (step S17) and returns to the determination process in step S11 to repeat the steps described above.

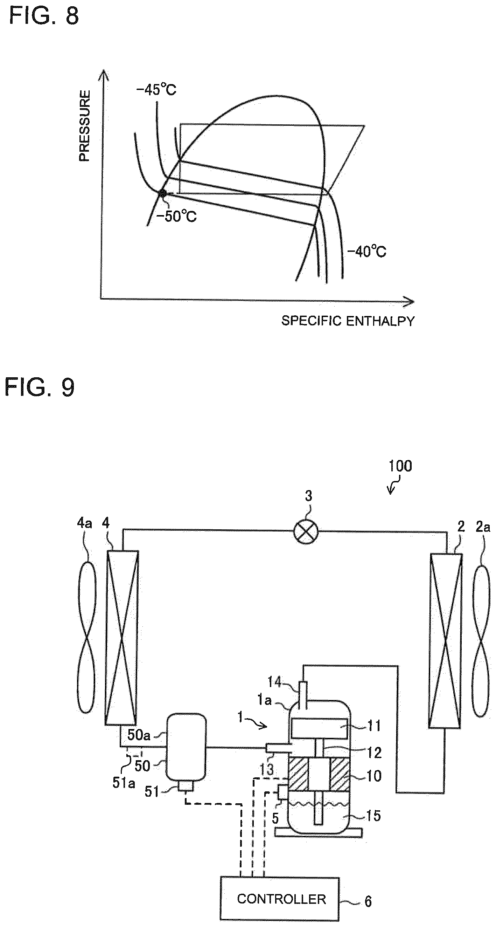

Fig. 8 is a Mollier diagram for illustrating cryo-protective control executed by the refrigeration cycle device according to Embodiment 3. In Fig. 8, the horizontal axis represents specific enthalpy, and the vertical axis represents pressure. Fig. 8 also shows a saturation curve and an isotherm.

In Fig. 8, a temperature at a black spot is equivalent to the saturated liquid temperature calculated based on the pressure at the place between the outlet of the pressure reducing unit 3 and the inlet of the compressor 1. The controller in Embodiment 3 stops the compressor 1 when the saturated liquid temperature has decreased to -50 degrees C. Consequently, in this case, a decision to stop the compressor 1 is made when the saturated liquid temperature based on the pressure measured with the pressure sensor reaches -50 degrees C and thus the decision to stop the compressor 1 is made even if no refrigerant returns in the form of liquid to the compressor. In other words, the controller in Embodiment 3 stops the compressor 1 at an earlier stage than in Embodiments 1 and 2 does and enables the refrigeration cycle device to adhere to a rule on the minimum operating temperature of a housing 1a of the compressor 1 with increased reliability.

Embodiment 4, not forming part of the present invention.

In Embodiments 1 to 3, the device subject to cryo-protection is only the compressor. In Embodiment 4, an accumulator is also subject to cryo-protection.

Fig. 9 is a drawing illustrating a configuration of a refrigeration cycle device according to Embodiment 4.

As shown in Fig. 9, a refrigeration cycle device 100 of Embodiment 2 includes an accumulator 50 at a suction side of a compressor 1 to store refrigerant, in addition to the refrigerant circuit in Embodiment 1 shown in Fig. 1. A housing 50a of the accumulator 50 is made of a material same as that for a housing 1a of the compressor 1. In a similar way to the housing 1a of the compressor 1, a temperature of the housing 50a of the accumulator 50 needs to be kept from falling below the minimum operation temperature.

Hence, the refrigeration cycle device 100 of Embodiment 4 includes a second temperature sensor 51 to measure the temperature of the housing 50a of the accumulator 50. The temperature measured with the second temperature sensor 51 is input to a controller 6.

Cryo-protective control executed by the controller 6 is basically the same as that in Embodiment 1 shown in Fig. 2. The cryo-protective control in Embodiment 2 differs from the cryo-protective control in Embodiment 1 in that in place of the "compressor temperature" in steps S1 and S4, a lower one of the temperature measured with a first temperature sensor 5 and the temperature measured with the second temperature sensor 51 is taken. Apart from this, steps in Embodiment 4 are similar to the steps in Embodiment 1.

Any of the first and the second patterns of the heating process in Embodiment 1 can be applied. In Embodiment 4, the accumulator 50 is also subject to cryo-protection. Thus, when the first pattern of the heating process is applied, a heater may be disposed on an outer periphery of the accumulator 50. When the second pattern of the heating process is applied, the refrigerant circuit may include a bypass branching off from a passage between the compressor 1 and a condenser 2 and being connected to a passage between an evaporator 4 and the accumulator 50 and a solenoid valve to open or close the bypass.

According to Embodiment 4, even the refrigeration cycle device that includes the compressor 1 and the accumulator 50 as devices subject to cryo-protection prevents the temperature of each of the housing 1a of the compressor 1 and the housing 50a of the accumulator 50 from falling below the minimum operating temperature.

In the embodiment described above, the refrigeration cycle device includes the temperature sensors for both the compressor 1 and the accumulator 50. However, the first temperature sensor 5 for the compressor 1 may be omitted and only the second temperature sensor 51 for the accumulator 50 may be used. This is because in an operating state where the return of liquid refrigerant to the compressor occurs, the liquid refrigerant flowing from the evaporator 4 flows into the accumulator 50 before flowing into the compressor 1 and thus the temperature measured with the second temperature sensor 51 is always lower than the temperature measured with the first temperature sensor 5. In this respect it can be said that the second temperature sensor 51 for the accumulator 50 alone is enough to serve the purpose. However, by being provided with the temperature sensors for both the compressor 1 and the accumulator 50, the refrigeration cycle device can implement cryo-protection even in the event of a fault in either of the temperature sensors.

In Embodiment 4, the devices subject to cryo-protection are the accumulator 50 as well as the compressor 1, and Embodiment 4 may be combined with Embodiment 2. In other words, as shown by a dotted line in Fig. 9, a fourth temperature sensor 51a may be disposed on a pipe upstream of the accumulator 50 to measure the temperature of the refrigerant flowing into the accumulator 50. The refrigeration cycle device may use a lower one of the temperature of the refrigerant flowing into the accumulator 50 and being measured with the fourth temperature sensor 51a and the temperature of the refrigerant flowing into the compressor 1 and being measured with the third temperature sensor 5a as an index value to execute cryo-protective control.

Embodiment 4 may be combined with Embodiment 3. In other words, the refrigeration cycle device that includes the accumulator 50 may include the pressure sensor 40 disposed at a place between the outlet of the pressure reducing unit 3 and the inlet of the compressor 1. The refrigeration cycle device may use the saturated liquid temperature based on a pressure measured with the pressure sensor 40 as an index value to execute cryo-protective control.

Embodiment 4 may be combined with both Embodiments 2 and 3. In other words, all the first temperature sensor 5, the second temperature sensor 51, the third temperature sensor 5a, and the fourth temperature sensor 51a may be disposed, and the refrigeration cycle device may use a lowest one of the temperatures measured with the respective temperature sensors as an index value to execute cryo-protective control.

In Embodiments 1 and 2, the device subject to cryo-protection is the compressor 1 but may be the accumulator 50. In other words, the refrigeration cycle device may use the temperature of the housing 50a of the accumulator 50 or the temperature of the pipe upstream of the accumulator 50 as an index value to execute cryo-protective control.

In Embodiments 1 to 4, the heating process is executed. However, only stopping the compressor 1 causes the temperature of the compressor 1 to rise because temperature around the compressor 1 is higher than the cryo-protective temperature. Thus, the heating process is not necessarily required and may be omitted. Nevertheless, in view of shorter duration of the operation stop, it is preferred that the heating process be executed.

In the description given above, the three patterns of the heating process are shown, and any one of the patterns is selected to execute the heating process, for example. However, all or some of the patterns may be concurrently used to execute the heating process.

### Reference Signs List

1 compressor1a housing 2 condenser 2a first fan 3 pressure reducing unit 4 evaporator 4a second fan 5 first temperature sensor 5a third temperature sensor 6 controller 10 motor 11 compressor unit 12 main shaft 13 suction pipe 14 discharge pipe 15 refrigerating machine oil 20 crankcase heater 30 bypass31 solenoid valve 40 pressure sensor 50 accumulator 50a housing 51 second temperature sensor 51a fourth temperature sensor 100 refrigeration cycle device

## Claims

1. A refrigeration cycle device (100) comprising:
a refrigerant circuit in which refrigerant circulates, the refrigerant circuit being made up of devices including a compressor (1), a condenser (2), a pressure reducing unit (3), and an evaporator (4);
a measurement sensor configured to measure an index value related to a temperature of a housing (1a) of a device subject to cryo-protection out of the devices making up the refrigerant circuit; and
a controller (6) configured to control the refrigerant circuit,
wherein the refrigerant is a refrigerant with a large temperature glide having a difference of 1 degree C or greater in temperature between saturated liquid and saturated vapor at a constant pressure,
wherein the measurement sensor is a temperature sensor configured to measure a temperature of the housing (1a) of the device subject to cryo-protection, as the index value,
wherein the controller (6) is configured to control the refrigerant circuit to maintain a temperature of the refrigerant in a form of the saturated vapor at a temperature higher than a cryo-protective temperature that is specified depending on a minimum operating temperature based on a material used for the housing (1a) of the device subject to cryo-protection,
wherein the controller (6) controls the refrigerant circuit to increase a pressure level of lower pressure in the refrigerant circuit when the index value reaches the cryo-protective temperature or below, and
wherein the device subject to cryo-protection is the compressor (1).

2. The refrigeration cycle device (100) of claim 1, wherein the controller (6) stops operation of the compressor (1) when the index value reaches the cryo-protective temperature or below.

3. The refrigerant cycle device (100) of claim 1 or 2,
wherein the controller (6) sends a notice when the index value reaches the cryo-protective temperature or below.

4. The refrigeration cycle device (100) of any one of claims 1 to 3, wherein the controller (6) executes a heating process to increase the temperature of the housing (1a) of the device subject to cryo-protection when the index value measured with the measurement sensor stays at the cryo-protective temperature or below even after the controller (6) stops operation of the compressor (1) in a course of controlling the refrigerant circuit to increase the pressure level of the lower pressure in the refrigerant circuit, and
wherein the controller (6) restarts the operation of the compressor (1) when the heating process causes the temperature of the housing of the device subject to cryo-protection to increase to a level above the cryo-protective temperature.

5. The refrigeration cycle device (100) of claim 4, comprising a heater disposed on an outer periphery of the housing (1a) of the device subject to cryo-protection to heat the housing (1a),
wherein the controller (6) executes the heating process by turning on the heater.

6. The refrigeration cycle device (100) of claim 4 or 5, wherein the refrigerant circuit includes a bypass (30) branching off from a passage between the compressor (1) and the condenser (2) and being connected to a passage between the evaporator (4) and the device subject to cryo-protection and a solenoid valve (31) to open or close the bypass (30), and
wherein the controller (6) executes the heating process by opening the solenoid valve (31) and letting the refrigerant discharged from the compressor (1) flow into the device subject to cryo-protection via the bypass (30).

7. The refrigeration cycle device (100) of any one of claims 4 to 6, wherein the controller (6) executes the heating process by supplying electric current to a motor (10) in the compressor (1) to execute constraint energization.

## Patentansprüche

1. Kühlkreislaufvorrichtung (100), die aufweist:
einen Kühlmittelkreislauf, in welchem ein Kühlmittel zirkuliert, wobei der Kühlmittelkreislauf aus Vorrichtungen gebildet wird, die einen Kompressor (1), einen Kondensator (2), eine Druckminderungseinheit (3) und einen Verdampfer (4) umfassen;
einen Messsensor, der zum Messen eines Indexwerts eingerichtet ist, der mit einer Temperatur eines Gehäuses (1a) einer Vorrichtung, die einem Kälteschutz unterworfen wird, aus den Vorrichtungen verknüpft ist, die den Kühlmittelkreislauf bilden; und
eine Steuerung (6), die zum Steuern des Kühlmittelkreislaufs eingerichtet ist,
wobei das Kühlmittel ein Kühlmittel mit einem großen Temperaturgleit ist, der eine Temperaturdifferenz von 1 Grad Celsius oder mehr zwischen einer gesättigten Flüssigkeit und einem gesättigten Dampf bei einem konstanten Druck aufweist,
wobei der Messsensor ein Temperatursensor ist, der zum Messen einer Temperatur des Gehäuses (1a) der Vorrichtung, die einem Kälteschutz unterworfen wird, als den Indexwert eingerichtet ist,
wobei die Steuerung (6) eingerichtet ist, den Kühlmittelkreislauf auf einer Temperatur des Kühlmittels in Form des gesättigten Dampfs bei einer Temperatur zu halten, die höher als eine Kälteschutztemperatur ist, die abhängig von einer minimalen Betriebstemperatur basierend auf einem Material spezifiziert ist, das für das Gehäuse (1a) der Vorrichtung verwendet wird, die einem Kälteschutz unterworfen wird,
wobei die Steuerung (6) den Kühlmittelkreislauf steuert, um ein Druckniveau eines niedrigen Drucks in dem Kühlmittelkreislauf zu erhöhen, wenn der Indexwert die Kälteschutztemperatur erreicht oder darunter liegt, und
wobei die Vorrichtung, die einem Kälteschutz unterworfen wird, der Kompressor (1) ist.

2. Kühlkreislaufvorrichtung (100) nach Anspruch 1, wobei die Steuerung (6) einen Betrieb des Kompressors (1) stoppt, wenn der Indexwert die Kälteschutztemperatur erreicht oder darunter liegt.

3. Kühlkreislaufvorrichtung (100) nach Anspruch 1 oder 2,
wobei die Steuerung (6) eine Benachrichtigung sendet, wenn der Indexwert die Kälteschutztemperatur erreicht oder darunter liegt.

4. Kühlkreislaufvorrichtung (100) nach einem der Ansprüche 1 bis 3, wobei die Steuerung (6) einen Heizvorgang ausführt, um die Temperatur des Gehäuses (1a) der Vorrichtung zu erhöhen, die einem Kälteschutz unterworfen wird, wenn der Indexwert, der mit dem Messsensor gemessen wird, bei der Kälteschutztemperatur bleibt oder darunter liegt, selbst nachdem die Steuerung (6) einen Betrieb des Kompressors (3) im Verlauf einer Steuerung des Kühlmittelkreislaufs anhält, um das Druckniveau des niedrigen Drucks in dem Kühlmittelkreislauf zu erhöhen, und
wobei die Steuerung (6) den Betrieb des Kompressors (1) erneut startet, wenn der Heizvorgang die Temperatur des Gehäuses der Vorrichtung, die einem Kälteschutz unterworfen wird, auf ein Niveau oberhalb der Kälteschutztemperatur erhöhen lässt.

5. Kühlkreislaufvorrichtung (100) nach Anspruch 4, die eine Heizeinrichtung aufweist, die an einem äußeren Rand des Gehäuses (1a) der Vorrichtung angeordnet ist, die einem Kälteschutz unterworfen wird, um das Gehäuse (1a) zu erwärmen,
wobei die Steuerung (6) den Heizvorgang ausführt, indem die Heizeinrichtung eingeschaltet wird.

6. Kühlkreislaufvorrichtung (100) nach Anspruch 4 oder 5, wobei der Kühlmittelkreislauf eine Umgehung (30) umfasst, die sich von einer Passage zwischen dem Kompressor (1) und dem Kondensator (2) abzweigt und die mit einer Passage zwischen dem Verdampfer (4) und der Vorrichtung, die einem Kälteschutz unterworfen wird, und einem Magnetventil (31) verbunden ist, um die Umgehung (30) zu öffnen oder zu schließen; und
wobei die Steuerung (6) den Heizvorgang ausführt, indem das Magnetventil (31) geöffnet wird und indem das Kühlmittel, das aus dem Kompressor (1) ausgegeben wird, in die Vorrichtung, die einem Kälteschutz unterworfen wird, über die Umgehung (30) strömen darf.

7. Kühlkreislaufvorrichtung (100) nach einem der Ansprüche 4 bis 6, wobei die Steuerung (6) den Heizvorgang ausführt, indem ein elektrischer Strom an einem Motor (1) im Kompressor (1) zum Ausführen einer Zwangsbestromung gespeist wird.

## Revendications

1. Dispositif à cycle frigorifique (100) comprenant :
un circuit de fluide frigorigène dans lequel circule un fluide frigorigène, le circuit de fluide frigorigène étant constitué de dispositifs incluant un compresseur (1), un condenseur (2), une unité de réduction de pression (3), et un évaporateur (4) ;
un capteur de mesure configuré pour mesurer une valeur d'indice liée à une température d'un logement (1a) d'un dispositif soumis à cryoprotection hors des dispositifs constituant le circuit de fluide frigorigène ; et
un dispositif de commande (6) configuré pour commander le circuit de fluide frigorigène,
où le fluide frigorigène est un fluide frigorigène avec un glissement de température important d'une différence de 1 degré C ou plus en température entre le liquide saturé et la vapeur saturée à une pression constante,
où le capteur de mesure est un capteur de température configuré pour mesurer une température du logement (1a) du dispositif soumis à cryoprotection, en tant que valeur d'indice,
où le dispositif de commande (6) est configuré pour commander le circuit de fluide frigorigène afin de maintenir une température du fluide frigorigène sous une forme de la vapeur saturée à une température plus élevée qu'une température de cryoprotection qui est spécifiée en fonction d'une température de fonctionnement minimale sur la base d'un matériau utilisé pour le logement (1a) du dispositif soumis à cryoprotection,
où le dispositif de commande (6) commande le circuit de fluide frigorigène pour augmenter un niveau de pression de pression plus basse dans le circuit de fluide frigorigène lorsque la valeur d'indice atteint la température de cryoprotection ou moins, et
où le dispositif soumis à cryoprotection est le compresseur (1).

2. Dispositif à cycle frigorifique (100) selon la revendication 1, où le dispositif de commande (6) arrête le fonctionnement du compresseur (1) lorsque la valeur d'indice atteint la température de cryoprotection ou moins.

3. Dispositif à cycle de fluide frigorigène (100) selon la revendication 1 ou 2,
où le dispositif de commande (6) envoie une notification lorsque la valeur d'indice atteint la température de cryoprotection ou moins.

4. Dispositif à cycle frigorifique (100) selon l'une quelconque des revendications 1 à 3, où le dispositif de commande (6) exécute un processus de chauffage pour augmenter la température du logement (1a) du dispositif soumis à cryoprotection lorsque la valeur d'indice mesurée avec le capteur de mesure reste à la température de cryoprotectrion ou moins même après que le dispositif de commande (6) arrête le fonctionnement du compresseur (1) au cours de la commande du circuit de fluide frigorigène pour augmenter le niveau de pression de la pression plus basse dans le circuit de fluide frigorigène, et
où le dispositif de commande (6) redémarre le fonctionnement du compresseur (1) lorsque le processus de chauffage amène la température du logement du dispositif soumis à cryoprotection à augmenter jusqu'à un niveau supérieur à la température de cryo-protection.

5. Dispositif à cycle frigorifique (100) selon la revendication 4, comprenant un dispositif de chauffage disposé sur une périphérie externe du logement (1a) du dispositif soumis à cryoprotection pour chauffer le logement (1a),
où le dispositif de commande (6) exécute le processus de chauffage en allumant le dispositif de chauffage.

6. Dispositif à cycle frigorifique (100) selon la revendication 4 ou 5, où le circuit de fluide frigorigène inclut une dérivation (30) se ramifiant à partir d'un passage entre le compresseur (1) et le condenseur (2) et étant raccordée à un passage entre l'évaporateur (4) et le dispositif soumis à cryoprotection et une électrovanne (31) pour ouvrir ou fermer la dérivation (30), et
où le dispositif de commande (6) exécute le processus de chauffage en ouvrant l'électrovanne (31) et en laissant le fluide frigorigène évacué du compresseur (1) s'écouler dans le dispositif soumis à cryoprotection via la dérivation (30).

7. Dispositif à cycle frigorifique (100) selon l'une quelconque des revendications 4 à 6, où le dispositif de commande (6) exécute le processus de chauffage en fournissant un courant électrique à un moteur (10) dans le compresseur (1) pour exécuter une excitation de contrainte.
